# EUROPÄISCHE PATENTSCHRIFT

(11) **EP 4 114 807 B1**
(45) Veröffentlichungstag und Bekanntmachung des Hinweises auf die Patenterteilung: **05.07.2023**
(21) Anmeldenummer: 21717043.0
(22) Anmeldetag: 06.04.2021
(51) Int. Cl.: C03C 27/00, C03C 27/04, B32B 17/06, C04B 37/04, C03B 23/20

(54) **VERFAHREN ZUM THERMISCH STABILEN VERBINDEN EINES GLASELEMENTS MIT EINEM TRÄGERELEMENT, VERFAHREN ZUM HERSTELLEN EINER OPTISCHEN VORRICHTUNG UND OPTISCHE VORRICHTUNG**
METHOD FOR MAKING A THERMALLY STABLE CONNECTION BETWEEN A GLASS ELEMENT AND A SUPPORT ELEMENT, METHOD FOR PRODUCING AN OPTICAL DEVICE, AND OPTICAL DEVICE
PROCÉDÉ POUR LA FORMATION D'UNE LIAISON THERMIQUEMENT STABLE ENTRE UN ÉLÉMENT EN VERRE ET UN ÉLÉMENT DE SUPPORT, PROCÉDÉ POUR LA PRODUCTION D'UN DISPOSITIF OPTIQUE ET DISPOSITIF OPTIQUE

(30) Priorität: 09.04.2020 DE 102020109968
(43) Veröffentlichungstag der Anmeldung: 11.01.2023
(73) Patentinhaber: JENOPTIK Optical Systems GmbH, 07745 Jena (DE)
(72) Erfinder: HERGENHAN, Guido, 07751 Großlöbichau (DE)
(74) Vertreter: Waldauf, Alexander
(86) Internationale Anmeldenummer: PCT/EP2021/058894
(87) Internationale Veröffentlichungsnummer: WO 2021/204776

(56) Entgegenhaltungen:
- JP-A- H10 194 795
- JP-A- 2009 126 005
- JP-A- 2018 087 122
- US-A1- 2018 033 951
- YI RUIXIANG ET AL: "The bonding between glass and metal", THE INTERNATIONAL JOURNAL OF ADVANCED MANUFACTURING TECHNOLOGY, SPRINGER, LONDON, Bd. 111, Nr. 3-4, 6. Oktober 2020 (2020-10-06), Seiten 963-983, XP037266927, ISSN: 0268-3768, DOI: 10.1007/S00170-020-06018-X [gefunden am 2020-10-06]

## Beschreibung

Der vorliegende Ansatz bezieht sich auf ein Verfahren zum thermisch stabilen Verbinden eines Glaselements mit einem Trägerelement, ein Verfahren zum Herstellen einer optischen Vorrichtung und eine optische Vorrichtung.

In der DE 10 2016 213 561 A1 wird ein Verfahren beschrieben, bei dem Materialien mit ähnlichen Ausdehnungskoeffizienten mittels Kleben, Löten oder Schweißen verbunden werden.

### Offenbarung der Erfindung

Vor diesem Hintergrund wird mit dem vorliegenden Ansatz ein Verfahren zum thermisch stabilen Verbinden eines Glaselements mit einem Trägerelement, ein Verfahren zum Herstellen einer optischen Vorrichtung und eine optische Vorrichtung gemäß den Hauptansprüchen vorgestellt. Vorteilhafte Ausgestaltungen ergeben sich aus den jeweiligen Unteransprüchen und der nachfolgenden Beschreibung.

Für Aufgaben zum Beispiel in Halbleiterbelichtungsmaschinen werden ebene Glasflächen benötigt, die fest mit einem Keramikträger verbunden sind. Gleichzeitig können die Bauelemente während ihrer Prozessierung, Herstellung und ihres Transports Temperaturschwankungen ausgesetzt sein. Mit dem hier vorgestellten Ansatz kann eine feste und klebstofffreie Verbindung von Glas und der Keramik realisiert werden, die auch nach prozess- oder transportbedingter Erwärmung eine ebene Oberfläche bei Raumtemperatur aufweisen kann.

Es wird ein Verfahren zum thermisch stabilen Verbinden eines Glaselements mit einem Trägerelement vorgestellt, wobei das Glaselement einen ersten Ausdehnungskoeffizienten und das Trägerelement einen von dem ersten Ausdehnungskoeffizienten abweichenden zweiten Ausdehnungskoeffizienten aufweist. Dabei umfasst das Verfahren einen Schritt des Anbringens eines Zwischenglasmaterials an dem Trägerelement, wobei das Zwischenglasmaterial einen dritten Ausdehnungskoeffizienten aufweist, der dem zweiten Ausdehnungskoeffizienten im Wesentlichen entspricht. Zudem umfasst das Verfahren einen Schritt des lokalen Erhitzens des Zwischenglasmaterials, um das Glaselement über das Zwischenglasmaterial mit dem Trägerelement zu verbinden.

Beispielsweise kann das Glaselement ein titandotiertes Quarzglas sein, welches zum Beispiel einen TiO2-Anteil von weniger als ca. 20 Gew.-% aufweisen kann. Dies ist beispielsweise bei einem sogenannten Ultra Low Expansion Glas (ULE-Glas) der Fall. Ein solches oder ähnliches Glaselement kann zum Beispiel einen ersten Ausdehnungskoeffizienten von 0 +/-3*10-8 K-1 aufweisen, während das Trägerelement zum Beispiel einen zweiten Ausdehnungskoeffizienten von 3 × 10⁻⁶ K⁻¹ aufweisen kann. Bei dem Trägerelement kann es sich beispielsweise um einen Keramikträger oder einen Metallträger handeln. Weitere Materialien des Trägerelements können zum Beispiel Ein- oder Polykristalline Festkörper, wie Silizium, Germanium, Saphir oder Quarz sein.

Bei einem direkten Verbinden des Glaselements mit dem Trägerelement, beispielsweise durch Kleben oder Löten und damit einhergehenden Temperaturschwankungen, könnte das Trägerelement sich temperaturbedingt ausdehnen, während das Glaselement weitgehend unverändert bleiben könnte. Dadurch könnte es zu Unebenheiten auf der Oberfläche des Glaselements kommen. Mit dem hier vorgestellten Verfahren können solche Unebenheiten vorteilhafterweise vermieden werden, indem das Glaselement mittels eines Zwischenglasmaterials klebstofffrei mit dem Trägerelement verbunden werden kann. Leider lässt sich insbesondere SiSiC-Keramik auf Grund der Graphitbildung nicht mit dem ULE-Glas direkt verschweißen.

Darum kann ein Zwischenglasmaterial, wie beispielsweise Borosilikatglas, in einem ersten Schritt mit dem Trägerelement verbunden werden, beispielsweise durch Schweißen oder Löten. Da das Zwischenglasmaterial, das auch als Glas 1 bezeichnet werden kann, einen dritten Ausdehnungskoeffizienten aufweist, der dem zweiten Ausdehnungskoeffizienten des Trägerelements gleicht, kann es bei Temperaturveränderungen, zum Beispiel während des Schweißens, ähnliche Spannungsveränderungen erfahren wie das Trägerelement. Bei einem gemeinsamen Abkühlen auf Raumtemperatur von beispielsweise 20°C kann das Zwischenglasmaterial eine plane Fläche auf dem Trägerelement bilden. Beispielsweise können das Zwischenglasmaterial und das Trägerelement einen identischen Ausdehnungskoeffizienten aufweisen oder die Ausdehnungskoeffizienten des Zwischenglasmaterials und des Trägerelements können sich geringfügig unterscheiden, beispielsweise eine Abweichung von weniger als 5%, weniger als 10%, weniger als 15% oder weniger als 20% aufweisen.

In einem zweiten Schritt kann das Glaselement, das auch als Glas 2 bezeichnet werden kann, durch ein punktuelles thermisches Verbindungsverfahren wie beispielsweise punktuelles Laserschweißen mit dem Zwischenglasmaterial verbunden werden. Dabei werden das Glaselement und das Zwischenglasmaterial mittels Laser simultan erhitzt und damit wird das Glaselement und das Zwischenglasmaterial miteinander verbunden. Das Zwischenglasmaterial und das Trägerelement wurden zuvor durch einen globalen Prozess zum Verbinden, wie beispielsweise Schweißen oder Löten, in eine feste Verbindung gebracht. Das Glaselement wird mit dem Zwischenglasmaterial also durch lokales Erhitzen verbunden und ist damit nur mittelbar über das Zwischenglasmaterial mit dem Trägerelement verbunden. Während des Verbindens des Glaselements mit dem Zwischenglasmaterial sollte die Temperatur des Trägerelements gemäß einer Ausführungsform bei Raumtemperatur bleiben, da es sonst bei der Abkühlung zur Raumtemperatur zu Verbiegung kommen kann. Entsprechend ist der Einsatz von Laserschweißen besonders vorteilhaft, da mit dieser Methode mittels ultrakurzer Laserimpulse eine lokal ausreichende Temperaturerhöhung für den Schweißvorgang bei gleichzeitig nahezu konstanter Temperatur des Trägerelements ermöglicht wird.

Im Ergebnis kann durch das vorgestellte Verfahren ein funktionales Glaselement mittels einer Zwischenglasschicht mit einem Metall- oder Keramikkörper verbunden sein, wobei das funktionale Glaselement und der Metall- oder Keramikkörper unterschiedliche Ausdehnungskoeffizienten aufweisen. Aufgrund der über eine Lot- und eine Schweißverbindung oder über zwei Schweißverbindungen realisierten Verbindung kann auch eine Verschiebung der Komponenten zueinander bei einer Temperaturerhöhung minimiert werden.

Gemäß einem Ausführungsbeispiel kann im Schritt des Anbringens das Zwischenglasmaterial ohne Verwenden einer Zwischenschicht direkt an dem Trägerelement fixiert werden. Beispielsweise kann das Zwischenglasmaterial, zum Beispiel ein Borosilikatglas, auf das Trägerelement ohne Zusatzstoffe wie etwa einen Klebstoff aufgeschweißt werden. Gemäß einer Ausführungsform kann das gesamte Bauteil inklusive des Borosilikatglases auf eine entsprechende Verbindungstemperatur erwärmt und anschließend abgekühlt werden. Das Zwischenglasmaterial sollte dabei so ausgewählt werden, dass der Ausdehnungskoeffizient des Zwischenglasmaterials und des Trägerelements für die Temperaturdifferenz zwischen der Schweißtemperatur und der Zimmertemperatur möglichst gleich sind. Beispiele wären Borosilikatglas und SiSiC-Keramik, Invar und Quarzglas oder Kovar und so genanntes Jenaer Geräteglas beziehungsweise Glas oder andere Materialkombinationen mit äquivalenten Eigenschaften. Vorteilhafterweise können das Zwischenglasmaterial und das Trägerelement dadurch kostengünstig und zugleich stoffschlüssig verbunden werden. Der Einsatz von Klebemittel zwischen dem Trägerelement und dem Glaselement kann also durch eine Verbindung ersetzt werden, die bei moderatem Erhitzen, zum Beispiel bis 100°C, nicht erweicht.

Gemäß einem weiteren Ausführungsbeispiel kann im Schritt des Anbringens das Zwischenglasmaterial scheibenförmig ausgeformt sein. Beispielsweise kann das Zwischenglasmaterial als Glasscheibe ausgeformt sein, die auf eine Oberfläche des Trägerelements aufgelegt und anschließend mit dem Trägerelement zum Beispiel verschweißt oder verlötet werden kann. Vorteilhafterweise kann eine solche Glasscheibe kostengünstig hergestellt und gelagert werden.

Gemäß einem weiteren Ausführungsbeispiel kann das Verfahren einen Schritt des Reduzierens einer Dicke des Zwischenglasmaterials vor dem Schritt des lokalen Erhitzens umfassen. Beispielsweise kann das Zwischenglasmaterial nach dem Schritt des Anbringens zum Beispiel mittels Abschleifen auf eine dünne Schicht von zum Beispiel ca. 100 µm abgedünnt werden, so dass ein Trägerelement mit einer dünnen Glasschicht erhalten werden kann. Unter einer dünnen Schicht kann eine Schicht von ca. 10 - 200 µm verstanden werden, die jedoch immer von den spezifischen eingesetzten Materialien und deren Eigenschaften abhängig sein kann. Dabei können Unebenheiten vor dem Reduzieren der Dicke des Zwischenglasmaterials zum Beispiel bis zu 1 mm groß sein. Vorteilhafterweise können während des Reduzierens auch restliche Verbiegungen der Oberfläche im Bereich bis zu einigen Mikrometern, zum Beispiel bis zu 0,1 µm, des aufgebrachten Glases durch einen Schleif- und Polierprozess beseitigt werden.

Gemäß einem weiteren Ausführungsbeispiel kann im Schritt des Anbringens das Zwischenglasmaterial erwärmt werden, um das Zwischenglasmaterial mit dem Trägerelement zu verbinden, wobei der Schritt des Anbringens vor dem Schritt des lokalen Erhitzens durchgeführt werden kann. Beispielsweise kann das Zwischenglasmaterial als Glaslot eingesetzt werden, das im Zuge einer Temperaturerhöhung eine stoffschlüssige Verbindung mit dem Trägerelement eingehen kann. Vorteilhafterweise kann der Schritt des Anbringens dadurch zeit- und kostengünstig durchgeführt werden.

Gemäß einer weiteren Ausführungsform kann das Verfahren einen zusätzlichen Schritt des Anfügens eines Lots an dem Trägerelement aufweisen, um das Zwischenglasmaterial mittels des Lots an dem Trägerelement anzubringen. Beispielsweise kann ein Metalllot oder ein Glaslot zwischen dem Trägerelement und dem Zwischenglasmaterial angeordnet werden, das einen niedrigeren Schmelzpunkt aufweist als das Zwischenglasmaterial. Bei einem Erhitzen des Lots kann dieses verbindend zwischen dem Trägerelement und dem Zwischenglasmaterial wirken. Dabei kann vorteilhafterweise ein Anpassen der Ausdehnungskoeffizienten von Trägermaterial und Zwischenglasmaterial ermöglicht werden, wodurch die für den Verbindungsprozess benötigte Temperatur reduziert werden kann.

Gemäß einem weiteren Ausführungsbeispiel kann im Schritt des lokalen Erhitzens das Glaselement und das Zwischenglasmaterial unter Verwendung eines gepulsten Laserstrahls erhitzt werden. Die Verbindung des Glaselements mit dem Zwischenglasmaterial kann zum Beispiel durch Laserschweißen mittels Kurzpuls erfolgen. Das hat den Vorteil, dass nur sehr lokal erhitzt wird und ein Erhitzen des gesamten Bauelements, wie beim Schweißen oder Löten oder Klebstofftempern, vermieden werden kann.

Gemäß einem weiteren Ausführungsbeispiel kann im Schritt des lokalen Erhitzens der Laserstrahl mit Kurzimpulsen im Bereich von Nanosekunden oder Pikosekunden oder Femtosekunden bereitgestellt werden. Beispielsweise können die Pulse abhängig vom Material des Glaselements und des Zwischenglasmaterials und dessen Parametern im Nanosekundenbereich, aber auch im Pico- und Femtosekundenbereich liegen. Vorteilhafterweise kann der Zeitraum des lokalen Erhitzens dadurch sehr kurz gehalten und somit vermieden werden, dass das Trägerelement sich während des Schritts des Erhitzens ebenfalls erwärmt.

Gemäß einem weiteren Ausführungsbeispiel kann im Schritt des Anbringens das Zwischenglasmaterial ringförmig um eine Aussparung des Trägerelements angebracht werden. Beispielsweise kann das Trägerelement eine Aussparung zum Durchlassen von Licht aufweisen. Die Aussparung kann von dem lichtdurchlässigen Glaselement verdeckt werden. Beispielsweise kann das Zwischenglasmaterial in Form einer ringförmigen Scheibe bereitgestellt und angebracht werden. Das Anbringen des Zwischenglasmaterials rund um die Aussparung hat den Vorteil, dass das Glaselement gleichmäßig um die Aussparung herum fixiert werden kann.

Das Verfahren kann erfindungsgemäß durch eine Steuereinheit mit einem Computerprogramm ergänzt werden, das dazu eingerichtet ist, die zuvor dargestellten Schritte des auszuführen und zusätzlich oder alternativ anzusteuern. Diese Steuereinheit kann ein maschinenlesbares Speichermedium enthalten, auf dem das Computerprogramm gespeichert ist.

Zudem wird ein Verfahren zum Herstellen einer optischen Vorrichtung vorgestellt, wobei das Verfahren einen Schritt des Bereitstellens eines Trägerelements und eines Glaselements umfasst, wobei das Glaselement einen ersten Ausdehnungskoeffizienten und das Trägerelement einen von dem ersten Ausdehnungskoeffizienten abweichenden zweiten Ausdehnungskoeffizienten aufweist. Zudem umfasst das Verfahren einen Schritt des Verbindens des Glaselements mit dem Trägerelement unter Durchführung der Schritte einer Variante des zuvor vorgestellten Verfahrens zum thermisch stabilen Verbinden eines Glaselements mit einem Trägerelement. Vorteilhafterweise kann mittels eines solchen Herstellungsverfahrens eine optische Vorrichtung hergestellt werden, die auch bei Temperaturschwankungen, beispielsweise während des Transports, eine ebene Oberfläche bei Raumtemperatur aufweist. Zum Durchführen des Verfahrens zum Herstellen einer optischen Vorrichtung kann beispielsweise ein oder mehrere Steuergeräte zum Ansteuern der einzelnen Schritte eingesetzt werden. So kann zum Beispiel ein Steuergerät ein klebemittelfreies Verbinden der einzelnen Komponenten, beispielsweise durch Schweißen oder Löten steuern, während ein weiteres Steuergerät zum Beispiel punktuelles thermisches Verbinden zwischen dem gefügten Zwischenglasmaterial und dem Glaselement beispielsweise mittels Laserschweißen realisieren kann. Zudem kann eine Schleif- und Poliervorrichtung so positioniert werden, dass restliche Verbiegungen der Oberfläche des Zwischenglasmaterials im Bereich bis zu einigen Mikrometern des aufgelöteten Glases bearbeitet werden können.

Gemäß einem Ausführungsbeispiel kann das Trägerelement aus Keramik und zusätzlich oder alternativ aus Metall ausgeformt sein. Vorteilhafterweise sind Trägerelemente aus Keramik oder Metall besonders kostengünstig herstellbar.

Gemäß einem weiteren Ausführungsbeispiel kann der erste Ausdehnungskoeffizient des Glaselements kleiner als 0,6 × 10⁻⁶ K⁻¹ sein und zusätzlich oder alternativ kann der dritte Ausdehnungskoeffizient des Zwischenglasmaterials im Bereich von 2 × 10⁻⁶ K⁻¹ bis 4 × 10⁻⁶ K⁻¹ liegen. Beispielsweise kann das Glaselement auch bei Temperaturschwankungen eine extrem geringe Ausdehnung erfahren, wodurch es vorteilhafterweise in optischen Vorrichtungen beispielsweise in der Präzisionsmesstechnik, der Raumfahrt und Satellitentechnologie, bei Laser-Resonatoren oder in EUV-Sensormodulen eingesetzt werden kann. Zugleich kann das Zwischenglasmaterial, bei dem es sich beispielsweise um Borosilikatglas handeln kann, zum Beispiel einen Ausdehnungskoeffizienten von 3,3 × 10⁻⁶ K⁻¹ aufweisen Dabei kann der zweite Ausdehnungskoeffizienten des Trägerelements einen ähnlichen Ausdehnungskoeffizienten aufweisen wie das Zwischenglasmaterial, beispielsweise von 3,5 × 10⁻⁶ K⁻¹. Vorteilhafterweise erfahren somit das Trägerelement sowie das Zwischenglasmaterial bei einer Temperaturerhöhung im Schritt des Anbringens eine ähnliche Ausdehnung, wodurch Spannungen und Unebenheiten auf den zusammengefügten Komponenten minimiert werden können.

Gemäß einem weiteren Ausführungsbeispiel kann das Trägerelement mit einer Aussparung ausgeformt sein, wobei die Aussparung im Schritt des Verbindens vom Glaselement abgedeckt werden kann. Dabei kann zum Beispiel das Zwischenglasmaterial ringförmig um die Aussparung angeordnet werden, so dass das Glaselement besonders gleichmäßig an dem Trägerelement fixiert werden kann. Vorteilhafterweise kann eine solche Aussparung beispielsweise mit einer Lichtquelle kombiniert werden, deren Lichtstrahl durch das Glaselement gelenkt werden kann.

Zudem wird eine optische Vorrichtung mit einem Trägerelement und einem Glaselement vorgestellt, wobei das Glaselement einen ersten Ausdehnungskoeffizienten und das Trägerelement einen von dem ersten Ausdehnungskoeffizienten abweichenden zweiten Ausdehnungskoeffizienten aufweist, wobei das Trägerelement mit einer Aussparung ausgeformt ist, die von dem Glaselement abgedeckt oder abdeckbar ist, und wobei das Trägerelement und das Glaselement durch ein an der Aussparung angeordnetes Zwischenglasmaterial verbunden sind, wobei das Zwischenglasmaterial einen dritten Ausdehnungskoeffizienten aufweist, der dem zweiten Ausdehnungskoeffizienten im Wesentlichen entspricht. Dabei kann das Glaselement so auf einem Festkörper befestigt werden, dass es auch nach einer Temperaturerhöhung und anschließender Abkühlung nicht zu Verbiegungen kommt. Vorteilhafterweise kann eine solche optische Vorrichtung in Sensormodulen wie beispielsweise EUV-Sensormodulen, also einem Sensormodul zum Sensieren extrem ultravioletter Strahlung, oder anderen hochpräzisen optischen Modulen eingesetzt werden. Eine derartige Komponenteneinheit wird dort benötigt, um die erforderlichen Eigenschaften verbiegungsfrei zu gewährleisten.

Zudem wird eine neue Verwendung von Borosilikatglas als Zwischenglasmaterial vorgestellt. Beispielsweise kann Borosilikatglas als Zwischenglasmaterial zum Verbinden eines Trägerelements mit einem Glaselement verwendet werden. Dabei kann das Borosilikatglas ähnlich einem Glaslot sowohl mit dem Trägerelement als auch mit dem Glaselement eine stoffschlüssig Verbindung eingehen. Vorteilhafterweise kann bei der Verwendung von Borosilikatglas als Zwischenglasmaterial auf zusätzliche Verbindungsschichten wie beispielsweise einen Klebstoff verzichtet werden.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Ausführungsbeispiels eines Trägerelements mit aufgeklebtem Glaselement bei Raumtemperatur;
Fig. 2 eine schematische Darstellung eines Ausführungsbeispiels eines Trägerelements mit aufgeklebtem Glaselement bei erhöhter Temperatur;
Fig. 3 eine schematische Darstellung eines Ausführungsbeispiels eines Trägerelements mit aufgeklebtem Glaselement nach dem Abkühlen;
Fig. 4 ein Ablaufdiagramm eines Ausführungsbeispiels eines Verfahrens zum thermisch stabilen Verbinden eines Glaselements mit einem Trägerelement;
Fig. 5 ein Ablaufdiagramm eines Ausführungsbeispiels eines Verfahrens zum thermisch stabilen Verbinden eines Glaselements mit einem Trägerelement;
Fig. 6 eine schematische Querschnittsdarstellung eines Ausführungsbeispiels eines Trägerelements mit angebrachtem Zwischenglasmaterial;
Fig. 7 eine schematische Querschnittsdarstellung eines Ausführungsbeispiels eines Trägerelements mit reduziertem Zwischenglasmaterial;
Fig. 8 eine schematische Querschnittsdarstellung eines Ausführungsbeispiels einer optischen Vorrichtung;
Fig 9 ein Ablaufdiagramm eines Ausführungsbeispiels eines Verfahrens zum Herstellen einer optischen Vorrichtung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

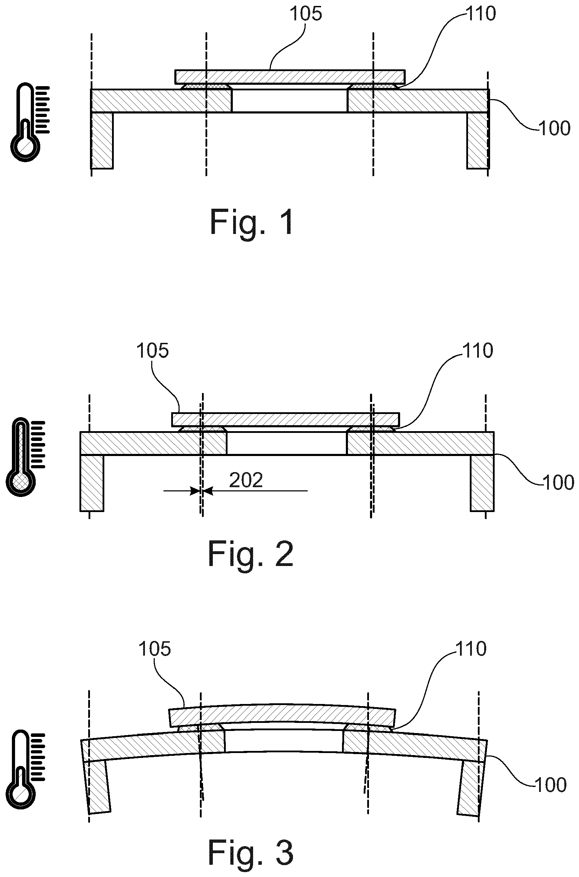

Fig. 1 zeigt eine schematische Darstellung eines Ausführungsbeispiels eines Trägerelements 100 mit aufgeklebtem Glaselement 105 bei Raumtemperatur von lediglich beispielhaft 20°C. Lediglich beispielhaft handelt es sich bei dem Trägerelement 100 um einen Keramikträger aus siliziuminfiltriertem Siliziumcarbid (SiSiC) mit einem zweiten Ausdehnungskoeffizienten von 3,0 × 10⁻⁶ K⁻¹. Auf dem Trägerelement 100 ist lediglich beispielhaft mittels eines Klebstoffs 110 ein scheibenförmiges Glaselement 105 aus beispielhaft titandotiertem Quarzglas aufgeklebt, das in diesem Ausführungsbeispiel einen ersten Ausdehnungskoeffizienten von ungefähr 0 K⁻¹ aufweist. Dabei bildet das Glaselement 105 in der hier gezeigten Darstellung eine ebene Fläche parallel zu dem Trägerelement 100.

Fig. 2 zeigt eine schematische Darstellung eines Ausführungsbeispiels eines Trägerelements 100 mit aufgeklebtem Glaselement 105 bei erhöhter Temperatur. Das hier dargestellte Trägerelement 100 und das Glaselement 105 entsprechen oder ähneln dem in der vorangegangenen Figur 1 beschriebenen Trägerelement und Glaselement. In der hier gezeigten Darstellung sind sowohl das Trägerelement 100 als auch das Glaselement auf lediglich beispielhaft 80°C erhitzt, um den zwischen ihnen angeordneten Klebstoff 110, der auch als Klebung bezeichnet werden kann, zu tempern. Dabei dehnt die Keramik des Trägerelements 100 sich aus, das Glaselement 105 aber nicht. Eine entsprechende Ausdehnung 202 ist in Fig. 2 schematisch angedeutet. Der Klebstoff 110 erweicht und lässt eine relative Verschiebung zwischen dem Glaselement 105 und dem Trägerelement 100 zu.

Fig. 3 zeigt eine schematische Darstellung eines Ausführungsbeispiels eines Trägerelements 100 mit aufgeklebtem Glaselement 105 nach dem Abkühlen auf Raumtemperatur. Das hier dargestellte Trägerelement 100 und das Glaselement 105 entsprechen oder ähneln dem in den vorangegangenen Figuren 1 und 2 beschriebenen Trägerelement und Glaselement, mit dem Unterschied, dass infolge der in der vorangegangenen Figur 2 beschriebenen Erhitzung das hier dargestellte Trägerelement 100 und das Glaselement 105 eine leichte Verformung aufweisen. Unterhalb einer Glasübergangstemperatur des Klebstoffs 110, die lediglich beispielhaft zwischen ca. 50 °C und 60 °C liegt, bildet der Klebstoff 110 eine feste Verbindung. Der Keramikträger zieht sich während des Abkühlens wieder zusammen, das Glaselement 105 jedoch nicht. Entsprechend ist das hier gezeigte Glaselement 105 durch den Bi-Metall-Effekt verbogen. Mit anderen Worten baut der Klebstoff 110 bei Fügepartnern mit unterschiedlichen Ausdehnungskoeffizienten über der Glastemperatur thermisch induzierte Spannungen durch Verschiebung der Fügepartner ab und friert diese sozusagen nach Abkühlung in einer verschobenen und damit in einer falschen oder unkorrekten Position ein.

In einem anderen Ausführungsbeispiel können ähnliche Spannungen beziehungsweise Unebenheiten auch durch Löten hervorgerufen werden. Beim Löten wird typischerweise das gesamte Bauteil auf die Löttemperatur erhitzt. Beim Abkühlen auf Raumtemperatur wird die Fügeposition an der Erstarrungstemperatur des Lotes fixiert, so dass bei unterschiedlichem Ausdehnungskoeffizient der verlöteten Teile eine thermisch induzierte Spannung durch die Abkühlung entsteht, die zur Verbiegung der Oberfläche führt. Der Effekt ist äquivalent zum Kleben, wobei die Erstarrungstemperatur des Lotes der Glasübergangstemperatur des Klebstoffs entspricht. Die Schmelztemperatur eines Lotes ist scharf definiert durch den Übergang fest zu flüssig. Der Klebstoff wird nicht flüssig beziehungsweise im Sinne des Vergleiches zum Lot wird er eigentlich nicht fest. Der Klebstoff ist amorph und ist damit eine unterkühlte Flüssigkeit, die lediglich ihre Viskosität ändert. Der Unterschied des Lötens zum Kleben bei Raumtemperatur besteht darin, dass es beim Löten nicht einmal einen Initialzustand gibt, bei dem die Fügepartner spannungsfrei und damit eben und fest miteinander verbunden sind.

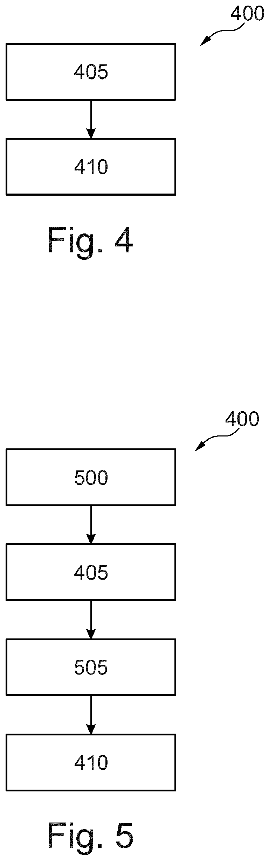

Fig. 4 zeigt ein Ablaufdiagramm eines Ausführungsbeispiels eines Verfahrens 400 zum thermisch stabilen Verbinden eines Glaselements mit einem Trägerelement, wie sie in den vorangegangenen Figuren 1 bis 3 beschrieben wurden, wobei das Glaselement einen ersten Ausdehnungskoeffizienten und das Trägerelement einen von dem ersten Ausdehnungskoeffizienten abweichenden zweiten Ausdehnungskoeffizienten aufweist.

Das Verfahren 400 umfasst einen Schritt 405 des Anbringens eines Zwischenglasmaterials an dem Trägerelement, wobei das Zwischenglasmaterial einen dritten Ausdehnungskoeffizienten aufweist, der dem zweiten Ausdehnungskoeffizienten im Wesentlichen entspricht. Das Zwischenglasmaterial wird beispielsweise einstückig oder mehrstückig, beispielsweise in Pulverform, aufgebracht. In diesem Ausführungsbeispiel wird im Schritt 405 des Anbringens lediglich beispielhaft das Zwischenglasmaterial ringförmig um eine Aussparung des Trägerelements angebracht und ohne Verwenden einer Zwischenschicht direkt an dem Trägerelement fixiert.

Lediglich beispielhaft wird hierbei ein Borosilikatglas ohne Verwenden einer Zwischenschicht oder Zusatzstoffen auf einen Keramikträger aufgeschweißt. In einem anderen Ausführungsbeispiel wird das Zwischenglasmaterial mittels eines Lots auf das Trägerelement gelötet.

Gemäß einem Ausführungsbeispiel wird das gesamte Zwischenglasmaterial und optional auch das Trägerelement auf eine Verbindungstemperatur erhitzt, die eine stoffschlüssige Verbindung zwischen dem Zwischenglasmaterial und dem Trägerelement ermöglicht, beispielsweise indem das Zwischenglasmaterial zumindest an einer an dem Trägerelement anliegenden Oberfläche zum Schmelzen gebracht wird. Anschließend wird das Bauteil abgekühlt, um das Zwischenglasmaterial dauerhaft mit dem Trägerelement zu verbinden.

In einem Ausführungsbeispiel folgt auf den Schritt 405 des Anbringens ein Schritt 410 des lokales Erhitzens des Zwischenglasmaterials und des Glaselements, um das Glaselement mit dem Zwischenglasmaterial zu verbinden, wodurch mittelbar eine Verbindung des Glaselements zum Trägerelement entsteht.. Dabei wird lediglich beispielhaft das Glaselement mit dem aufgeschweißten Borosilikatglas mechanisch in Kontakt gebracht und die feste Verbindung der beiden Gläser wird beispielhaft durch ein punktweises Verschweißen mittels eines Ultrakurzpulslasers realisiert. Der hierbei eingesetzte Laserstrahl ist lediglich beispielhaft auf Kurzimpulse für eine Dauer von beispielhaft 10 Nanosekunden eingestellt, um das Zwischenglasmaterial und das Glaselement lokal zu erhitzen. In einem anderen Ausführungsbeispiel werden die Kurzimpulse auch im Bereich von Pikosekunden oder Femtosekunden bereitgestellt. Durch den Einsatz von Kurzimpulsen wird ermöglicht, dass nur sehr lokal erhitzt wird und nicht, wie beim regulären Schweißen oder Löten oder Klebstofftempeln, das gesamte Bauelement erhitzt wird. Alternativ kann jedoch auch ein ungepulster Laserstrahl zum Erhitzen des Zwischenglasmaterials verwendet werden.

Fig. 5 zeigt ein Ablaufdiagramm eines Ausführungsbeispiels eines Verfahrens 400 zum thermisch stabilen Verbinden eines Glaselements mit einem Trägerelement. Das hier dargestellte Verfahren 400 entspricht oder ähnelt dem in der vorangegangenen Figur 4 beschriebenen Verfahren, mit dem Unterschied, dass es zusätzliche Schritte aufweist. So geht in diesem Ausführungsbeispiel dem Schritt 405 des Anbringens ein Schritt 500 des Anfügens eines Lots an dem Trägerelement voraus. Lediglich beispielhaft wird im Schritt 500 des Anfügens ein Metalllot an dem Trägerelement angeordnet und das in diesem Ausführungsbeispiel scheibenförmig ausgeformte Zwischenglasmaterial auf das Metalllot gesetzt. Im anschließenden Schritt 405 des Anbringens wird das Trägerelement mit dem Metalllot und dem Zwischenglasmaterial erwärmt, um das Zwischenglasmaterial mittels des Lots an dem Trägerelement anzubringen. Dabei ist das Zwischenglasmaterial so ausgewählt, dass der Ausdehnungskoeffizienten des Glases und der Keramik des Trägerelements für die Temperaturdifferenz zwischen der Erstarrungstemperatur des Lotes und der Zimmertemperatur möglichst gleich sind. In diesem Ausführungsbeispiel folgt auf den Schritt 405 des Anbringens ein zusätzliche Schritt 505 des Reduzierens einer Dicke des Zwischenglasmaterials. Dabei wird lediglich beispielhaft das scheibenförmige Zwischenglasmaterial abgeschliffen und poliert. Dabei werden restliche Verbiegungen der Oberfläche des aufgelöteten Zwischenglasmaterials lediglich beispielhaft in einem Bereich bis zu 20 µm durch diesen Schleif- und Polierprozess beseitigt. Eine moderate thermisch induzierte mechanische Spannung zwischen dem Zwischenglasmaterial und dem Trägerelement wird dabei zitiert. Erst nach dem Schritt 505 des Reduzierens folgt in diesem Ausführungsbeispiel der Schritt 410 des lokalen Erhitzens, wie er in der vorangegangenen Figur 4 beschrieben wurden.

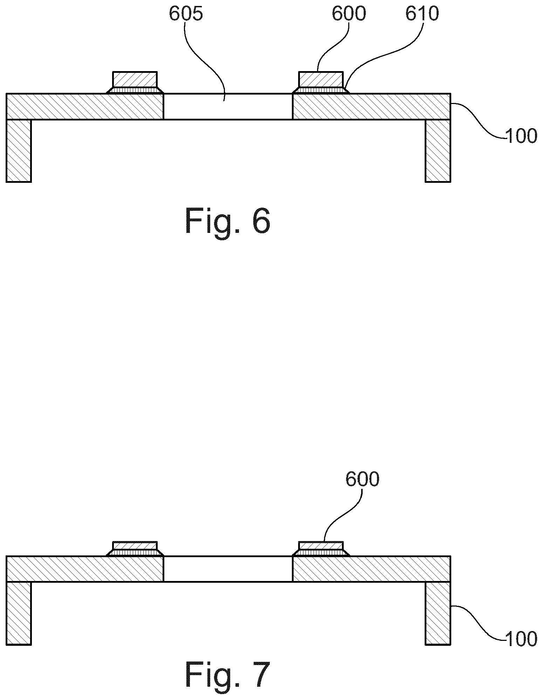

Fig. 6 zeigt eine schematische Querschnittsdarstellung eines Ausführungsbeispiels eines Trägerelements 100 mit angebrachtem Zwischenglasmaterial 600. Das hier dargestellte Trägerelement 100 entspricht oder ähnelt dem in den vorangegangenen Figuren beschriebenen Trägerelement. In diesem Ausführungsbeispiel weist das Trägerelement 100, dass lediglich beispielhaft als Keramikträger ausgebildet ist, eine Aussparung 605 auf um die lediglich beispielhaft in ringförmige Ausführung Borosilikatglas als Zwischenglasmaterial 600 angeordnet ist. Das Zwischenglasmaterial 600 ist lediglich beispielhaft 150 µm dick und ist in diesem Ausführungsbeispiel mittels eines Glasslots 610 mit dem Trägerelement 100 verbunden. In einem anderen Ausführungsbeispiel kann diese Verbindung auch mittels eines metallischen Lotes oder ganz ohne eine Zwischenschicht durch einen Schweißprozess hergestellt sein.

Fig. 7 zeigt eine schematische Querschnittsdarstellung eines Ausführungsbeispiels eines Trägerelements 100 mit reduziertem Zwischenglasmaterial 600. Das hier dargestellte Trägerelement 100 entspricht oder ähnelt dem in den vorangegangenen Figuren beschriebenen Trägerelement und das hier dargestellte Zwischenglasmaterial 600 entspricht oder ähnelt dem in den vorangegangenen Figuren 4 bis 6 beschriebenen Zwischenglasmaterial. In diesem Ausführungsbeispiel ist das Zwischenglasmaterial 600, beispielsweise ausgehend von dem in Fig. 6 gezeigten Zustand, auf eine Dicke von beispielhaft 100 µm reduziert, sodass es eine besonders dünne und plane Glasschicht auf dem Trägerelement 100 bildet. In einem anderen Ausführungsbeispiel kann die Schicht des Zwischenglasmaterials eine Dicke von ca. 10 bis 200 µm aufweisen, die jedoch immer von den spezifischen Materialien und deren Eigenschaften abhängig ist.

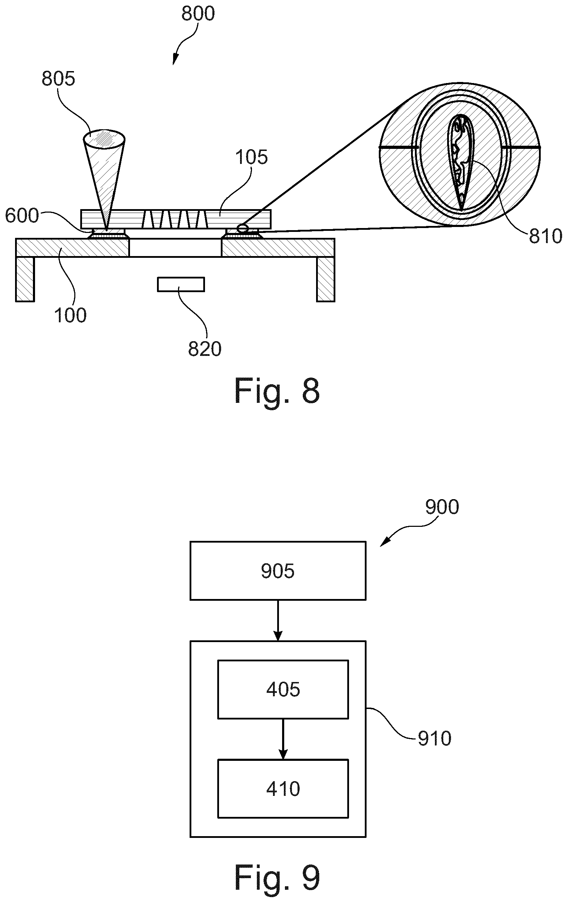

Gemäß einem Ausführungsbeispiel wird das Reduzieren der Dicke der Schicht aus dem Zwischenglasmaterial 600 mit einem geeigneten Reduzierungsverfahren durchgeführt, durch das sich eine plane Oberfläche des Zwischenglasmaterials 600 ergibt. Auf dieser dem Trägerelement 100 abgewandten planen Oberfläche lässt sich ein Glaselement aufsetzten, wie es beispielsweise in Fig. 8 gezeigt ist.

Fig. 8 zeigt eine schematische Querschnittsdarstellung eines Ausführungsbeispiels einer optischen Vorrichtung 800. Die optische Vorrichtung 800 umfasst in diesem Ausführungsbeispiel ein Trägerelement 100, wie es in den vorangegangenen Figuren beschrieben wurde, und ein Glaselement 105, wie es in den vorangegangenen Figuren 1 bis 5 beschrieben wurde. Das Glaselement 105 ist über ein Zwischenglasmaterial 600, wie es in den vorangegangenen Figuren 4 bis 7 beschrieben wurde, mit dem Trägerelement verbunden. Um diese Verbindung zu festigen ist in einem Ausführungsbeispiel ein Laserstrahl 805 eingesetzt, der das Zwischenglasmaterial 600 unter Verwendung von Kurzimpulsen lokal erhitzt. Lediglich beispielhaft weisen die Kurzimpulse des Laserstrahls 805 eine Dauer von 20 Pikosekunden auf. In einem anderen Ausführungsbeispiel können die Kurzimpulse abhängig vom eingesetzten Material und dessen Parametern in einem Nanosekundenbereich oder in einem Sekundenbereichen liegen. In diesem Ausführungsbeispiel ist mittels des Laserstrahls 805, der auch als UKP-Laser bezeichnet werden kann, eine Schweißblase 810 im Zwischenglasmaterial 600 erzeugbar, durch die eine stoffschlüssige Verbindung des Glaselements 105 mit dem Zwischenglasmaterial 600 herstellbar ist.

Gemäß einem Ausführungsbeispiel wird der Laserstrahl 805 über die gesamte oder einen Teilbereich derOberfläche des Zwischenglasmaterials 600 geführt, um das Zwischenglasmaterial 600 sicher mit dem Glaselement 105 zu verbinden. Beispielsweise wird eine Reihe von Schweißpunkten gesetzt, wie in der Schweißblase 810 zu sehen. Es wird nicht zwingend die komplette Oberfläche verschweißt. Es reicht eine gewisse Anzahl von Schweißpunkten zu setzen, die über die Oberfläche verteilt sind.

Gemäß einem Ausführungsbeispiel handelt es sich bei der optischen Vorrichtung 800 um ein EUV-Sensormodul. Beispielhaft formt das Trägerelement 100 dabei ein Gehäuse für einen Sensor 820 zum Erfassen von durch das Glaselement 105 durchtretender extrem ultravioletter Strahlung auf.

Fig. 9 zeigt ein Ablaufdiagramm eines Ausführungsbeispiels eines Verfahrens 900 zum Herstellen einer optischen Vorrichtung, wie sie in der vorangegangenen Figur 8 beschrieben wurde. Das Verfahren 900 umfasst einen Schritt 905 des Bereitstellens eines Trägerelements und eines Glaselements, wobei das Glaselement einen ersten Ausdehnungskoeffizienten von lediglich beispielhaft 0,4 × 10⁻⁶ K⁻¹ und das Trägerelement einen von dem ersten Ausdehnungskoeffizienten abweichenden zweiten Ausdehnungskoeffizienten aufweist. Lediglich beispielhaft ist das Trägerelement in diesem Ausführungsbeispiel aus Keramik ausgeformt und weist einen Ausdehnungskoeffizient von beispielhaft 3 × 10⁻⁶ K⁻¹ auf. Alternativ kann das Trägerelement auch aus Metall oder einer Kombination beider Materialien ausgebildet sein. Anschließend auf den Schritt 905 des Bereitstellens folgt in diesem Ausführungsbeispiel ein Schritt 910 des Verbindens des Glaselements mit dem Trägerelement. Der Schritt 910 des Verbindens umfasst die Unterschritte 405 und 410 des Verfahrens zum thermisch stabilen Verbinden eines Glaselements mit einem Trägerelement, wie es in der vorangegangenen Figur 4 beschrieben wurde. Dabei wird lediglich beispielhaft eine im Trägerelement ausgeformte Aussparung vom Glaselement abgedeckt.

## Patentansprüche

1. Verfahren (400) zum thermisch stabilen Verbinden eines Glaselements (105) mit einem Trägerelement (100), wobei das Glaselement (105) einen ersten Ausdehnungskoeffizienten und das Trägerelement (100) einen von dem ersten Ausdehnungskoeffizienten abweichenden zweiten Ausdehnungskoeffizienten aufweist und wobei das Verfahren (400) folgende Schritte umfasst:
Anbringen (405) eines Zwischenglasmaterials (600) an dem Trägerelement (100), wobei das Zwischenglasmaterial (600) einen dritten Ausdehnungskoeffizienten aufweist, der dem zweiten Ausdehnungskoeffizienten im Wesentlichen entspricht; und
lokales Erhitzen (410) des Zwischenglasmaterials (600), um das Glaselement (105) über das Zwischenglasmaterial (600) mit dem Trägerelement (100) zu verbinden.

2. Verfahren (400) gemäß Anspruch 1, wobei im Schritt (405) des Anbringens das Zwischenglasmaterial (600) ohne Verwenden einer Zwischenschicht direkt an dem Trägerelement (100) fixiert wird.

3. Verfahren (400) gemäß einem der vorangegangenen Ansprüche, wobei im Schritt (405) des Anbringens das Zwischenglasmaterial (600) scheibenförmig ausgeformt ist.

4. Verfahren (400) gemäß einem der vorangegangenen Ansprüche, mit einem Schritt (505) des Reduzierens einer Dicke des Zwischenglasmaterials (600) vor dem Schritt (410) des lokalen Erhitzens.

5. Verfahren (400) gemäß einem der vorangegangenen Ansprüche, wobei im Schritt (405) des Anbringens das Zwischenglasmaterial (600) erwärmt wird, um das Zwischenglasmaterial (600) mit dem Trägerelement (100) zu verbinden, wobei der Schritt (405) des Anbringens vor dem Schritt (410) des lokalen Erhitzens durchgeführt wird.

6. Verfahren (400) gemäß einem der vorangegangenen Ansprüche, mit einem Schritt (500) des Anfügens eines Lots an dem Trägerelement (100), um das Zwischenglasmaterial (600) mittels des Lots (610) an dem Trägerelement (100) anzubringen.

7. Verfahren (400) gemäß einem der vorangegangenen Ansprüche, wobei im Schritt (410) des lokalen Erhitzens das Glaselement (105) und das Zwischenglasmaterial (600) unter Verwendung eines gepulsten Laserstrahls (805) erhitzt wird.

8. Verfahren (400) gemäß Anspruch 7, wobei im Schritt (410) des lokalen Erhitzens der Laserstrahl (805) mit Kurzimpulsen im Bereich von Nanosekunden oder Pikosekunden oder Femtosekunden bereitgestellt wird.

9. Verfahren (400) gemäß einem der vorangegangenen Ansprüche, wobei im Schritt (405) des Anbringens das Zwischenglasmaterial (600) ringförmig um eine Aussparung (605) des Trägerelements (100) angebracht wird.

10. Verfahren (900) zum Herstellen einer optischen Vorrichtung (800), wobei das Verfahren (900) folgende Schritte umfasst:
Bereitstellen (905) eines Trägerelements (100) und eines Glaselements (105), wobei das Glaselement (105) einen ersten Ausdehnungskoeffizienten und das Trägerelement (100) einen von dem ersten Ausdehnungskoeffizienten abweichenden zweiten Ausdehnungskoeffizienten aufweist; und
Verbinden (910) des Glaselements (105) mit dem Trägerelement (100) unter Durchführung der Schritte (405, 410) des Verfahrens (400) zum thermisch stabilen Verbinden eines Glaselements (105) mit einem Trägerelement (100) gemäß Anspruch 1 bis 8.

11. Verfahren (900) gemäß Anspruch 10, wobei das Trägerelement (100) aus Keramik und/oder Metall ausgeformt ist.

12. Verfahren (900) gemäß Anspruch 10 oder 11, wobei der erste Ausdehnungskoeffizient des Glaselements (105) kleiner als 0,5 × 10⁻⁶ K⁻¹ ist und/oder der dritte Ausdehnungskoeffizient des Zwischenglasmaterials (600) im Bereich von 2 × 10⁻⁶ K⁻¹ bis 4 × 10⁻⁶ K⁻¹ liegt.

13. Verfahren (900) gemäß Anspruch 10 bis 12, wobei das Trägerelement (100) mit einer Aussparung (605) ausgeformt ist, wobei die Aussparung (605) im Schritt (910) des Verbindens vom Glaselement (105) abgedeckt wird.

14. Optische Vorrichtung (800) mit einem Trägerelement (100) und einem Glaselement (105), wobei das Glaselement (105) einen ersten Ausdehnungskoeffizienten und das Trägerelement (100) einen von dem ersten Ausdehnungskoeffizienten abweichenden zweiten Ausdehnungskoeffizienten aufweist, wobei das Trägerelement (100) mit einer Aussparung (605) ausgeformt ist, die von dem Glaselement (105) abgedeckt oder abdeckbar ist, und wobei das Trägerelement (100) und das Glaselement (105) durch ein an der Aussparung (605) angeordnetes Zwischenglasmaterial (600) verbunden sind, wobei das Zwischenglasmaterial (600) einen dritten Ausdehnungskoeffizienten aufweist, der dem zweiten Ausdehnungskoeffizienten im Wesentlichen entspricht.

## Claims

1. Method (400) for thermally stable joining of a glass element (105) to a support element (100), wherein the glass element (105) has a first coefficient of expansion and the support element (100) has a second coefficient of expansion differing from the first coefficient of expansion and wherein the method (400) comprises the following steps:
attaching (405) an intermediate glass material (600) to the support element (100), wherein the intermediate glass material (600) has a third coefficient of expansion which substantially corresponds to the second coefficient of expansion; and
local heating (410) of the intermediate glass material (600) in order to join the glass element (105) to the support element (100) via the intermediate glass material (600) .

2. Method (400) according to Claim 1, wherein in the step (405) of attaching, the intermediate glass material (600) is fixed directly to the support element (100) without using an intermediate layer.

3. Method (400) according to one of the preceding claims, wherein in the step (405) of attaching, the intermediate glass material (600) is shaped like a disc.

4. Method (400) according to one of the preceding claims, having a step (505) of reducing a thickness of the intermediate glass material (600) before the step (410) of local heating.

5. Method (400) according to one of the preceding claims, wherein in the step (405) of attaching, the intermediate glass material (600) is heated in order to join the intermediate glass material (600) to the support element (100), wherein the step (405) of attaching is carried out before the step (410) of local heating.

6. Method (400) according to one of the preceding claims, having a step (500) of adding a solder to the support element (100) in order to attach the intermediate glass material (600) to the support element (100) by means of the solder (610).

7. Method (400) according to one of the preceding claims, wherein in the step (410) of local heating, the glass element (105) and the intermediate glass material (600) is heated using a pulsed laser beam (805).

8. Method (400) according to Claim 7, wherein in the step (410) of local heating, the laser beam (805) is provided with short pulses in the range of nanoseconds or picoseconds or femtoseconds.

9. Method (400) according to one of the preceding claims, wherein in the step (405) of attaching, the intermediate glass material (600) is attached like a ring around a recess (605) of the support element (100).

10. Method (900) for producing an optical device (800), wherein the method (900) comprises the following steps:
provision (905) of a support element (100) and of a glass element (105), wherein the glass element (105) has a first coefficient of expansion and the support element (100) has a second coefficient of expansion differing from the first coefficient of expansion; and
joining (910) the glass element (105) to the support element (100) while carrying out the steps (405, 410) of the method (400) for thermally stable joining of a glass element (105) to a support element (100) according to Claim 1 to 8.

11. Method (900) according to Claim 10, wherein the support element (100) is shaped from ceramic and/or metal.

12. Method (900) according to Claim 10 or 11, wherein the first coefficient of expansion of the glass element (105) is less than 0.5 × 10⁻⁶ K⁻¹ and/or the third coefficient of expansion of the intermediate glass material (600) lies in the range from 2 × 10⁻⁶ K⁻¹ to 4 × 10⁻⁶ K⁻¹.

13. Method (900) according to Claim 10 to 12, wherein the support element (100) is shaped with a recess (605), wherein the recess (605) is covered by the glass element (105) in the step (910) of joining.

14. Optical device (800) having a support element (100) and a glass element (105), wherein the glass element (105) has a first coefficient of expansion and the support element (100) has a second coefficient of expansion differing from the first coefficient of expansion, wherein the support element (100) is shaped with a recess (605) which is covered or can be covered by the glass element (105), and wherein the support element (100) and the glass element (105) are joined by an intermediate glass material (600) arranged on the recess (605), wherein the intermediate glass material (600) has a third coefficient of expansion which substantially corresponds to the second coefficient of expansion.

## Revendications

1. Procédé (400) de liaison thermiquement stable d'un élément en verre (105) à un élément de support (100), l'élément en verre (105) présentant un premier coefficient de dilatation et l'élément de support (100) présentant un deuxième coefficient de dilatation différent du premier coefficient de dilatation, et le procédé (400) comprenant les étapes suivantes :
l'application (405) d'un matériau de verre intermédiaire (600) sur l'élément de support (100), le matériau de verre intermédiaire (600) présentant un troisième coefficient de dilatation qui correspond essentiellement au deuxième coefficient de dilatation ; et
le chauffage local (410) du matériau de verre intermédiaire (600) afin de relier l'élément en verre (105) à l'élément de support (100) par l'intermédiaire du matériau de verre intermédiaire (600).

2. Procédé (400) selon la revendication 1, dans l'étape (405) d'application, le matériau de verre intermédiaire (600) étant fixé directement sur l'élément de support (100) sans utiliser une couche intermédiaire.

3. Procédé (400) selon l'une quelconque des revendications précédentes, dans l'étape (405) d'application, le matériau de verre intermédiaire (600) étant formé en forme de disque.

4. Procédé (400) selon l'une quelconque des revendications précédentes, avec une étape (505) de réduction de l'épaisseur du matériau de verre intermédiaire (600) avant l'étape (410) de chauffage local.

5. Procédé (400) selon l'une quelconque des revendications précédentes, dans l'étape (405) d'application, le matériau de verre intermédiaire (600) étant chauffé afin de relier le matériau de verre intermédiaire (600) à l'élément de support (100), l'étape (405) d'application étant effectuée avant l'étape (410) de chauffage local.

6. Procédé (400) selon l'une quelconque des revendications précédentes, avec une étape (500) d'ajout d'une brasure à l'élément de support (100) afin d'appliquer le matériau de verre intermédiaire (600) sur l'élément de support (100) au moyen de la brasure (610).

7. Procédé (400) selon l'une quelconque des revendications précédentes, dans l'étape (410) de chauffage local, l'élément en verre (105) et le matériau de verre intermédiaire (600) étant chauffés en utilisant un faisceau laser pulsé (805).

8. Procédé (400) selon la revendication 7, dans l'étape (410) de chauffage local, le faisceau laser (805) étant fourni avec des impulsions courtes de l'ordre de la nanoseconde ou de la picoseconde ou de la femtoseconde.

9. Procédé (400) selon l'une quelconque des revendications précédentes, dans l'étape (405) d'application, le matériau de verre intermédiaire (600) étant appliqué sous forme annulaire autour d'un évidement (605) de l'élément de support (100).

10. Procédé (900) de fabrication d'un dispositif optique (800), le procédé (900) comprenant les étapes suivantes :
la fourniture (905) d'un élément de support (100) et d'un élément en verre (105), l'élément en verre (105) présentant un premier coefficient de dilatation et l'élément de support (100) présentant un deuxième coefficient de dilatation différent du premier coefficient de dilatation ; et
la liaison (910) de l'élément en verre (105) à l'élément de support (100) en effectuant les étapes (405, 410) du procédé (400) pour la liaison thermiquement stable d'un élément en verre (105) à un élément de support (100) selon les revendications 1 à 8.

11. Procédé (900) selon la revendication 10, l'élément de support (100) étant formé de céramique et/ou de métal.

12. Procédé (900) selon la revendication 10 ou 11, le premier coefficient de dilatation de l'élément en verre (105) étant inférieur à 0,5 × 10⁻⁶ K⁻¹ et/ou le troisième coefficient de dilatation du matériau de verre intermédiaire (600) se situant dans la plage allant de 2 × 10⁻⁶ K⁻¹ à 4 × 10⁻⁶ K⁻¹.

13. Procédé (900) selon les revendications 10 à 12, l'élément de support (100) étant formé avec un évidement (605), l'évidement (605) étant recouvert par l'élément en verre (105) dans l'étape (910) de liaison.

14. Dispositif optique (800) avec un élément de support (100) et un élément en verre (105), l'élément en verre (105) présentant un premier coefficient de dilatation et l'élément de support (100) présentant un deuxième coefficient de dilatation différent du premier coefficient de dilatation, l'élément de support (100) étant formé avec un évidement (605), qui est recouvert ou peut être recouvert par l'élément en verre (105), et l'élément de support (100) et l'élément en verre (105) étant reliés par un matériau de verre intermédiaire (600) agencé au niveau de l'évidement (605), le matériau de verre intermédiaire (600) présentant un troisième coefficient de dilatation qui correspond essentiellement au deuxième coefficient de dilatation.
